(19) Europäisches Patentamt

European Patent Office

Office européen des brevets

(11) **EP 3 550 789 A1**

(12) # EUROPEAN PATENT APPLICATION
published in accordance with Art. 153(4) EPC

(43) Date of publication:
**09.10.2019 Bulletin 2019/41**

(21) Application number: **17892571.5**

(22) Date of filing: **31.03.2017**

(51) Int Cl.:
**H04L 29/06** (2006.01)          **G06F 15/18** (2006.01)

(86) International application number:
**PCT/RU2017/000194**

(87) International publication number:
**WO 2018/135964 (26.07.2018 Gazette 2018/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.01.2017  RU 2017101441**

(71) Applicant: **Obschestvo S Ogranichennoi
Otvetstvennostyu
"Solidsoft"
Moscow, 121205 (RU)**

(72) Inventors:
• **NOSEEVICH, Georgy Maksimovich
Moscow 107140 (RU)**
• **GAMAYUNOV, Denis Yurievich
Moscow 121108 (RU)**
• **SHERVARLY, Valeria Grigorievna
Kholm
Novgorodskaya oblast 175270 (RU)**
• **KAYUMOV, Emil Marselevich
Sterlitamak
Resp. Bashkortostan 453103 (RU)**

(74) Representative: **Chimini, Francesco
Jacobacci & Partners S.p.A.
Piazza della Vittoria 11
25122 Brescia (IT)**

(54) **METHOD FOR PROTECTING WEB APPLICATIONS BY AUTOMATICALLY GENERATING
APPLICATION MODELS**

(57)    The technical solution relates to the field of detecting attacks on web applications using positive security models and building web application models using machine learning methods. The computer-implemented method to protect web applications from various classes of attacks, including logical attacks, based on the automatic building of web application models, which automatically collect training data on the functioning of the web application; at least one functional web application model is generated by parsing and analyzing the training data obtained in the previous step; false positives for the rules for detecting attacks on web applications are recognized based on the training data and the generated models of the web application functioning; the web application protection mode is included, in which new incoming requests to a web application and its responses are analyzed, the degree of normality or anomaly of these requests is assessed, and then actions are taken on their further processing. The technical result is an increase in the performance of an intelligent firewall. 2 indep. cl., 9 dep, cl., 15 fig.

FIG.1

EP 3 550 789 A1

## Description

### FIELD OF THE INVENTION

This technical solution relates, in general, to the computing area, and in particular to the area of detecting attacks on the protected web application using positive security models and building models of the web application functioning using machine learning methods.

### BACKGROUND OF THE INVENTION

Currently, web applications automate complex and critical business processes such as exchange trading, freight management, government services, etc. The known Web application protection solutions - WAF, Web Application Firewalls - do not provide adequate protection against modern threats. According to the current recommendations of the OWASP international organization on the use of web application firewalls, a significant part of modern types of attacks on web applications cannot be detected and blocked using existing solutions. Insufficient protection mechanisms in modern network (inter-network) firewalls of web application layer have technological reasons. On one hand, these solutions use outdated conceptions about web applications (or, formally, models of web applications). In most web application protection solutions, the client-side model is the concept of an "HTML page with links and forms", and the server part is described as a set of statically and dynamically executable files. With the recent advances in development of web applications (MVC, SOA, REST, API-centric), the concept of files was replaced by the concept of processing a request by its fragments (usually a URL), and HTML documents gave way to dynamic asynchronous interfaces. In addition, the structural complexity of HTTP messages increases; nested encapsulation and encoding (for example, a base64-encoded array of JSON objects) is used to transfer structured data. As a result, the expressive means of modern web application firewalls preclude the structure and normal behavior of modern web applications from being described either manually or, even more so, automatically. The positive security models created by modern solutions are not effective, subject to bypasses and false positives, and the syntactic diversity of queries makes negative security models (signature rules) inapplicable.

On the other hand, "traditional" computer attacks gradually cease to be relevant, giving way to complex logical vulnerabilities, including at least:

- authorization vulnerabilities which allow users to access data and features of a web application bypassing access control rules;

- privilege escalations due to parameters values manipulation;

- access to internal web application features which are not displayed in the user interface;

- violation of the availability of a web application for other users;

- possibility of bypassing or abusing the rules for granting bonuses/discounts;

- attacks on protocols of web application integration with third-party systems, for example, incorrect implementation of integration with payment systems.

From the prior art there is known the patent source of information no. US8051484 "Method and security system for identifying and blocking web attacks by enforcing read-only parameters", patentee: Imperva, Inc., date of publication: 01.11.2011. This source describes methods of web applications protection from attacks associated with spoofing by intruder of read-only parameters of HTTP requests, i.e. parameters for which developer of web application implies the immutability of values. The technical solution describes the principles of such parameters auto-detection using heuristic features (for example, transferring parameters as hidden fields of web forms) and statistical ones (immutability of parameter values between successive requests and responses of web application), followed by monitoring the immutability of read-only parameters values at the step of web application protection. Thus, this solution describes only a special case of building one of the models of web application (the so-called "profile" of parameters), but only in the context of view of HTTP requests and responses.

Another patent source of information: US7472413 "Security for WAP servers", patentee: F5 Networks, Inc., date of publication: 30.12.2008. This technical solution describes a method for auto-detection of allowable sequences of requests to resources of a web application in the form of a graph of valid transitions between its HTML pages based on automatic bypassing of a web application by software means (web crawlers), as well as analyzing the sequence of requests and responses from network traffic. This method allows developing an analogue of the "use case" model of a web application, but not in terms of the functional logic layer of a web application, but only in terms of the sequence of transitions between HTML pages. The "page-flow of a web application" model built in this way is suitable for protection against some types of attacks (for example, direct access to a closed part of a web application by link), but it does not allow, for example, to administer user access rights in terms of web-application subject domain.

Another patent source of information: US20120278851 «Automated policy builder», patentee: F5 Networks, Inc., date of publication: 01.11.2012. This solution describes automatic building methods of such functioning models of a web application as lists of allowed URL addresses in a web application, lists of valid parameters (which can be transferred in a request to each URL address) and ranges of their valid values. These models (so-called "profiles" of a web application) are developed automatically based on the analysis of requests to a web application and responses from it and can be overridden by the operator. In addition, the principles for determining the "stability" of individual elements of the built profiles (based on heuristic criteria of a long-term absence of changes in values) or the need to redevelop "profiles" for individual elements or exclude individual signature rules with a high level of false positives (based on the heuristic rules for observing a large number of anomalies from a large number of trusted IP addresses). The disadvantage of these methods is, firstly, modeling a web application only in terms of HTTP requests, and secondly, using heuristic rules with a single set of constants for all protected web applications without taking into account such characteristics as, for example, the relative amount of requests to a web application per unit of time.

The major global manufacturers of web application firewalls do not have technical solutions for detecting a wide variety of logical attacks on protected web applications.

The level of modeling the main aspects of the functioning of a web application for inter-network layer firewalls in existing technical solutions is limited by the syntax and semantics of HTTP requests to a web application and responses of a web application, as well as administration of the types and ranges of the values of the parameters of HTTP requests. These models make it impossible to detect logical attacks on a web application efficiently and with a low level of false positives.

Also in the prior art there are no methods for automatically building models of the functional logic layer of web application using machine learning algorithms.

## SUMMARY OF TECHNICAL SOLUTION

This technical solution is aimed at eliminating the disadvantages inherent in the solutions current from the prior art.

The technical object solved in this technical solution is to build and use not only models of the syntax and semantics of HTTP requests to a web application for protection of a web application, but also models of the functional logic layer of a web application, including recognition of actions of the functional logic layer of a web application (request routing schemes in a web application), define the syntax and semantics of action parameters of a web application, identify use cases for a web application and user administration rules of access to the resources and objects of a web application subject domain.

The technical result achieved according to this technical solution is to increase the performance of an intelligent firewall.

Also, the technical result is to improve the quality of detecting false positives of signature attack detection rules and anomaly detection modules for certain types of requests.

These technical results are achieved using machine learning algorithms, whereby requests to static resources of a web application are automatically detected and request data URL address patterns are built to exclude request data from detailed analysis at the web application protection step.

The key difference of the claimed technical solution from the approaches used in known firewalls at the layer of a web application is the transition from the principle of "parsing the request to the HTTP layer; one URL - one set of parameters and their models" to the principle "in-depth parsing of requests, taking into account the features of the application, selecting the actions of the functional logic layer of a web application and their parameters (the classification criterion may not only be the request URL), and creating models for action parameters". This approach yields two advantages over known solutions for protecting web applications:

- making it possible to detect logical attacks on web applications;

- reducing the level of false positives of the firewall of a web application layer (from ~30% to 0.1% and lower).

The claimed solution is an intelligent firewall for web applications protection, which automatically collects training data and builds models of web application functioning, including building models of the syntax and semantics of HTTP requests to a web application and responses to them (for further parsing of HTTP requests and responses), identifying actions of the functional logic layer of a web application (request routing model), defining sets of parameters and valid values of parameters for given actions (model of web application action parameters), and building models for web application use cases and rules for administrating access to web application resources and functions. In addition, the intelligent firewall also detects false positives (for signature attack detection rules or individual anomaly detection modules) and identifies requests to static resources of a web application by building URL address patterns of these requests.

Building models of the syntax and semantics of HTTP requests and responses to them, building a request routing model, identifying requests to static resources of a web application (building URL patterns of these requests) and identifying false positives (signature attack detection rules or individual anomaly detection modules) are achieved using machine learning algorithms (for example, by hierarchical clustering) and data analysis (for example, statistical correlation analysis). The building of these models, URL address patterns of requests to static resources and a list of signature rules with a high level of false positives is achieved in fully automatic mode, without the participation of the operator and/or the administrator of the intelligent firewall.

## BRIEF DESCRIPTION OF THE DRAWINGS

The features and advantages of this technical solution will become obvious from the below detailed description and accompanying drawings, namely, wherein:

Fig. 1 illustrates the overall system architecture that implements a method to protect web applications with an intelligent firewall using automatic application model building.

Fig. 2 illustrates an embodiment of a method for protecting web applications with an intelligent firewall using automatic application model building.

Fig. 3 illustrates a method for building models of a protected web application in one embodiment of the method.

Fig. 4 illustrates an embodiment of a partial tree parsing a request to a web application.

Fig. 5 illustrates another embodiment of a tree parsing a request to a web application.

Fig. 6 illustrates a method for building a request parse tree.

Fig. 7 illustrates an exemplary decision tree embodiment for parsing requests.

Fig. 8 illustrates a method for building a decision tree for parsing requests over a set of request parse trees.

Fig. 9 illustrates the decoder applicability table used in the process of clustering request trees when building a decision tree for parsing requests.

Fig. 10 illustrates a method for building a web application request routing model.

Fig. 11 illustrates a method for detecting requests to static resources of a web application and building URL address patterns of requests to static resources of a web application.

Fig. 12 illustrates a method of searching for a set of URL addresses of static resources of a web application based on multiple pairs of requests to a web application and responses of a web application.

Fig. 13 illustrates an exemplary embodiment of a finite automaton simulating a web application use cases.

Fig. 14 illustrates a method for detecting false positives for signature attack detection rules and individual anomaly detection modules, creating false positive log messages, and generating settings for excluding these signature rules from further processing at the web application protection step.

Fig. 15 illustrates a general method of processing a single request to a web application at the step of protection of a web application by the system.

## DETAILED DESCRIPTION OF THE INVENTION

The concepts and definitions necessary for the detailed disclosure of the technical solution embodiment will be described below.

This technical solution can be implemented as a distributed computer system.

In this technical solution **the system** means a computer system, PC (personal computer), CNC (computer numeric control), PLC (programmable logic controller), computerized control system and any other devices which can perform defined, clearly determined sequences of operations (actions, instructions).

**Command processing device** means an electronic unit or integral circuit (microprocessor) which executes machine instructions (programs).

A command processing device reads and executes machine instructions (programs) received from one or more data storage devices. **Data storage devices** may include, but not limited, to hard drives (HDD), flash memory, ROM (read-only memory), solid-state drives (SSD), optical carriers (CD, DVD, etc.).

**Program** - a sequence of instructions intended for execution by computer control device or command processing devices.

**Positive security model** (also known as "white lists") - a security models which explicitly specify a set of allowed actions and prohibits all other actions (i.e., those actions that are not included in the allowed list).

**Functional logic of a web application -** a set of applied tasks solved by a web application, expressed in terms of the objects of the web application subject domain, actions (logical manipulations) over them and restrictions reflecting the valid use cases of a web application and the rights of various categories of its users. For example, a web application that supports an Internet blog provides the user with the option to create, view, edit and delete records and comment on them - each such option represents a separate action of the functional logic layer of a web application.

Examples of web application subject domain objects are, for example, products in an online store, blog entries, user accounts in payment systems, etc.

**Computer attack** - targeted unauthorized impact on information, on the resource of an information system or obtaining unauthorized access to them using software or hardware and software.

**Logical attack** - computer attack on the functional logic layer of a web application, i.e. such an attack, during which there is no violation of the syntax and semantics of HTTP requests to a web application, but the actions of the functional logic layer of a web application, which should not be available to the intruder according to the conception of the developers, are performed on his behalf.

**Inter-network layer firewall** (INLF), security system, network layer firewall, "fire wall" - a system (hardware or software) or a combination of systems that forms the boundary between two or more networks for protection, preventing unauthorized access to the network or the output of data packets from it.

**Web application** - a client-server application where the client is a browser, and the server is a web server. The web application logic is distributed between the server and the client, data is stored primarily on the server, information is exchanged over the network.

**Collection of training data** - in this technical solution, the process of collecting requests to a web application, responses of a web application (and, optionally, messages about the triggering of signature attack detection rules) during a predetermined by the operator and/or system administrator time period during which the functioning of a web application is considered "normal" (expressing valid use cases).

**Web application protection step** - this step implements the web application protection mode against possible attacks on it by intruders. The implementation of this step begins after the transfer of the system to the web application protection mode, which is carried out automatically after the completion of the training step and building models of the web application functioning or at the command of the operator and/or system administrator.

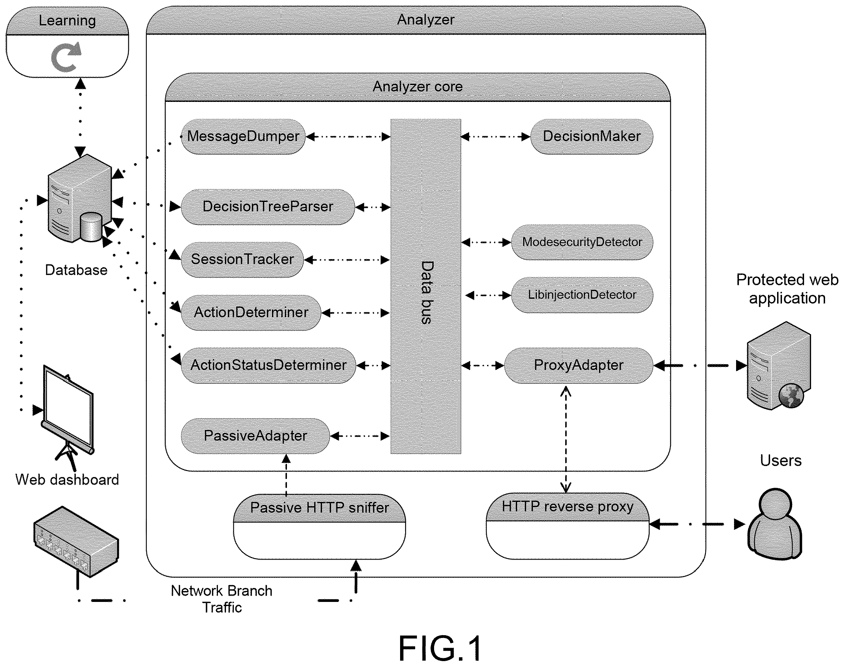

The overall architecture of the system implementing the claimed method is illustrated in Fig. 1. The system consists of the following components:

data analysis component (Analyzer), which is for receiving and analyzing the protected web application traffic (web application requests and web application responses), analyzing it in order to detect attacks on a web application (including web application functional logic layer attacks) and responding to these attacks, including blocking attacking requests and/or generating and saving messages about detected attacks;

data storage component (Database), which is for long-term storage of various information in the database, including at least: training data (web application requests and web application responses collected during the training data collection step), built web application operation models, log messages generated during system operation, and various system settings;

component of building models of web application functioning (Learning), which is for automatic building of models of web application functioning on the basis of information stored in the component Database;

component of the graphical interface (Web dashboard), which is for implementing the graphical interface of the operator and/or the system administrator.

The components used in the system can be implemented with electronic components used to create digital integrated circuits. Chips, the logic of which is determined during manufacture, or field programmable logic devices (FPLDs), the logic of which is set by programming, can be used without being limited to. Programmers and debugging environments are used for programming, allowing to set up the desired structure of a digital device in the form of a circuit diagram or program in special hardware description languages: Verilog, VHDL, AHDL, et al. Alternatives of FPLDs are: programmable logic controllers (PLC), basic matrix crystals (BMC), requiring a factory production process for programming; ASIC - specialized custom large-scale integrated circuits (LSI circuits), which are much more expensive for small-scale and individual production.

Components can also be implemented using permanent storage devices.

Thus, the implementation of all components used is achieved by standard means, based on the classical principles of the implementation of the foundations of computer engineering.

The names of the components in English are provided for a clearer understanding of the essence of the technical solution and do not limit the essence or implementation of the technical solution.

The Analyzer component implements the following functionality:

• capturing of the protected web application traffic (web application requests and web application responses);

• collecting of training data (web application requests and web application responses) at the step of training the system and storing them in the Database component;

• storing information about web application requests and web application responses in the Database component at the step of protection of a web application;

• analyzing of traffic at the step of protection of a web application, including the classification of requests for normal or anomalous, including the classification of individual anomalous requests as attacks on a web application;

• making decisions on forwarding a request to a web application or blocking it;

• generating of log messages about detected anomalies and attacks, and writing of message data to the Database component.

The Analyzer component consists of at least the following three service components:

• active traffic capture component (HTTP reverse proxy), which implements the reverse HTTP proxy logic to intercept protected web application requests and web application responses;

- passive traffic capture component (Passive HTTP proxy component), which implements the functionality of passively obtaining a copy of the traffic between a protected web application and its users via a network TAP;

- web application request and response analysis and decision making component (Analyzer Core), which implements the functionality of collecting information about web application requests and web application responses, analyzing web application requests using the built web application functioning models, request classification on normal and anomalous (including the classification of the request, as attacks on a web application), and making decisions on the transfer of the request to a protected web application or its blocking.

The HTTP reverse proxy service component is a reverse proxy server for intercepting HTTP traffic. In one of the embodiment and placement of the system, there is supposed to operate in the reverse HTTP proxy mode. In this mode, the HTTP reverse proxy service component provides interception of requests to a protected web application, transferring information about these requests to the Analyzer Core service component and waiting for the request processing solution from this service component.

At least the transfer of the request to a protected web application, or blocking and clearing the request are possible as the decisions for processing the request. In one of the embodiments, it is also possible to provide a user with a special response to a web application, containing a check using the CAPTCHA test (Completely Automated Public Turing test to tell Computers and Humans Apart). In such a situation, a user request can be transferred to a protected web application only after the successful solution of the CAPTCHA test by the web application user.

In one of the embodiments of the system, the HTTP reverse proxy component can also implement the logic of automatic classification of requests for requests to static and dynamic resources of a web application. This behavior of the HTTP reverse proxy component is controlled by specific settings generated during the system training process by the Learning component, stored in the Database component and transferred to the HTTP reverse proxy component by the Analyzer Core component. When classifying an incoming request as a request to a static resource of a protected web application, the request is transferred to a protected web application without further processing by the Analyzer Core service component, which reduces the computational load. When classifying a request as a request to a dynamic resource of a protected web application, the request transfer is postponed until the Analyzer Core service component makes an appropriate decision on the request processing (transfer to a web application, blocking or presenting the CAPTCHA test to the user).

The Passive HTTP sniffer component is responsible for capturing a copy of the traffic to a protected web application received from the network TAP. In a system embodiment alteration that assumes working with a copy of traffic, the Passive HTTP sniffer component extracts a protected web application request flow and web application responses from a copy of the network traffic and transfers information about them to the Analyzer Core component. Blocking anomalous (or attacking) requests (and web server responses to these requests) is not possible for a copy of network traffic in this system embodiment, although the collection of training data at the system training step and the analysis of requests and responses at a web application protection stage (with the generation of appropriate log messages for the operator and/or the system administrator) remain available.

In one of the system embodiment, the Passive HTTP sniffer component can also implement the logic of automatic classification of requests for requests to static and dynamic resources of a web application. This behavior of the Passive HTTP sniffer component is controlled by specific settings generated during the system training process by the Learning component, stored in the Database component and transferred to the Passive HTTP sniffer component by the Analyzer Core component. When classifying an incoming request as a request to a static resource of a protected web application, information about the request is not transferred to the Analyzer Core component, which reduces the computational load. When classifying a request as a request to a dynamic resource of a protected web application, the request information is transferred to the Analyzer Core component for further analysis.

The Analyzer Core component provides analysis of requests to the protected web server and responses from the web server and making decisions on processing the request based on the analysis results. Analyzer Core component consists of a set of modules, which include:

- module of interaction with the active traffic capture component (ProxyAdapter) - is responsible for interaction with the HTTP reverse proxy service module in terms of:

    ◦ receiving of information about web application requests and responses from it;
    ◦ transferring of the HTTP reverse proxy component solutions for further processing of the received request;
    ◦ transferring of the HTTP reverse proxy component settings in order to classify protected web application requests for requests to static and dynamic resources of a web application in one of the possible system embodiment;

- module of interaction with the passive traffic capture component (PassiveAdapter) - responsible for interaction with the Passive HTTP sniffer service module in terms of:

◦ receiving of information about web application requests and responses from it;
◦ transferring of the Passive HTTP sniffer component settings in order to classify protected web application requests for requests to static and dynamic resources of a web application in one of the possible system embodiment;

• module of interaction with the data storage component (MessageDumper) - responsible for recording into the database the information about web application requests and web application responses at the steps of collecting training data and protecting a web application, as well as for recording log messages about detected anomalies and/or attacks on a web application;
• HTTP requests and responses parsing module (DecisionTreeParser) - responsible for parsing incoming web application requests and web application responses in accordance with the built syntactic and structural models for parsing HTTP requests and responses of a web application;
• action recognition module of the web application functional logic (ActionDeterminer) - responsible for analyzing web application requests to identify the actions of a web application functional logic layer, in accordance with the request routing model;
• module for recognizing the result of performing the action of the functional logic layer of a web application (ActionStatusDeterminer) - responsible for analyzing web application responses to identify the success or failure of the previously initiated action of the functional logic layer of a web application, in accordance with the request routing model in a web application;
• session tracking module (SessionTracker) - responsible for analyzing web application requests and web application responses, to track sessions and users, in accordance with the request routing model in a web application and auxiliary models describing features of successful and unsuccessful execution of requests;
• request processing decision-making module (DecisionMaker) - responsible for analyzing web application requests, performing at least:

◦ assessing of a degree of normality or anomaly of the request based on the built models of syntax and semantics of parameters for a certain action of the functional logic layer of a web application;
◦ classifying of a request for a normal, anomalous, or attack on a web application based on evaluations of the anomaly of the request generated by the Analyzer Core component modules and rules for assessing the anomaly of the request given by the operator and/or the system administrator;
◦ making of a decision on processing a request based on the rules for administrating access that were automatically generated or stated by the operator and/or the system administrator, and previously carried out request classification for a normal, anomalous, or attack on a web application.

In one of the system embodiments, the Analyzer Core component can also include a module for detecting attacks on a web application using the ModSecurity means (ModsecurityDetector). This module is a means for analyzing HTTP requests to a web application based on the application of a set of signature rules. This means is developed by a third party and is available publicly in the form of source codes and a set of signature rules. Within the system, the ModsecurityDetector module analyzes requests to a protected web application using a set of signature rules and generates log messages about the triggering of certain signatures. These messages can be recorded to the Database component, as well as used by the DecisionMaker component when classifying a request.

In one of the system embodiments, the Analyzer Core component can also include a module for detecting attacks on a web application using the Libinjection means (LibinjectionDetector). This module is a means for analyzing HTTP requests to a web application, based on an assessment of the degree of anomaly of a request for the presence of attack features in a previously parsed request. This means is developed by a third party and is available publicly in the form of source codes and a set of signature rules. Within the framework of the system, the LibinjectionDetector module analyzes requests to a protected web application, parsing the request and searching for features of an attack in it, and generates log messages with an assessment of the degree of anomaly of the request. These messages can be recorded to the Database component, as well as used by the DecisionMaker module when classifying a request.

In one of the system embodiments, the Learning component can perform the step of detecting false positives of individual signature attack detection rules, and settings for the ModsecurityDetector and LibinjectionDetector modules are generated, which allow excluding these signature rules from further use in analyzing queries.

All modules of the Analyzer Core component exchange information via a common data exchange bus, which can be implemented in various methods depending on the embodiment alteration of the system.

Database component is a database for long-term storage of all information necessary for the functioning of the system. This information includes at least:

- information about the characteristics of normal web application requests (including the HTTP requests themselves) and web application responses collected during the system training step;

- models of functioning of a web application built as a result of the functioning of the Learning component, including models of the syntax and semantics of HTTP requests and various models of the functional logic layer of a web application;

- log messages about anomalies and attacks on a protected web application detected during the functioning of the Analyzer component, as well as related web application requests;

- system settings in terms of rules for building web application functional models, rules for classifying incoming requests for normal and anomalous, and rules for responding to detected anomalies in requests;

- system settings in the form of a list of signature rules for detecting attacks with a high level of false positives, which are to be excluded from processing at the step of protection of a web application;

- various system service information.

Depending on the embodiment, various embodiments of the DBMS can be selected for implementing the Database component, on the basis of which this component and various embodiments of the Database component architecture (for example, centralized or distributed database) can be implemented.

The Learning component is designed to automatically build models of the functioning of a web application based on the information gathered about the characteristics of normal web application requests and the rules for building web application models. Information about the characteristics of normal web application requests is stored in the Database component and updated by the Analyzer component during the collection of training data. Model building rules are stored in the Database component and can be added to it or modified by the operator and/or the system administrator using the Web dashboard component. The process of building web application functional models can be started automatically at the end of the time period allocated for the collection of training data. The models of a web application functioning built by the Learning component are stored further in the Database component.

In one of the system embodiments, the Learning component can also include the functionality of detecting false positives (signature attack detection rules or individual anomaly detection modules) using statistical methods. In this embodiment, the Learning component uses data collected by the Analyzer at the step of collecting training data and stored in the Database component to identify signature rules and individual anomaly detection modules with a high level of false positives. It also creates log messages about false positives and generates new settings for the signature modules of the Analyzer component, by which these signature rules are excluded from subsequent use.

The Web dashboard component implements the GUI functions for the operator and/or the system administrator to monitor the situation and respond to incidents. This component is for implementation of at least the following functions:

- providing the operator and/or administrator with information on the current state of a protected web application, including data on current web application requests;

- notifying the operator and/or administrator about detected anomalies in the protected web application requests or attacks on a web application and the actions taken by the system;

- viewing statistical information on the protected web application functioning for a selected time period in the past and viewing information about previously detected anomalies in requests or attacks on a protected web application;

- modifying of existing rules governing the building of a web application model, rules for classifying web application requests into normal and anomalous (including marking individual requests as attacks on a web application), and rules for responding to detected anomalous requests and attacks, as well as creating new rules of specified types;

- adjusting of individual parameters of the functioning of other system components. The Web dashboard component receives all the necessary information from the Database component. In the event that the operator and/or administrator create new rules for building models, classifying requests or responding to anomalies and attacks, or modifying existing rules, these changes are saved to the Database component.

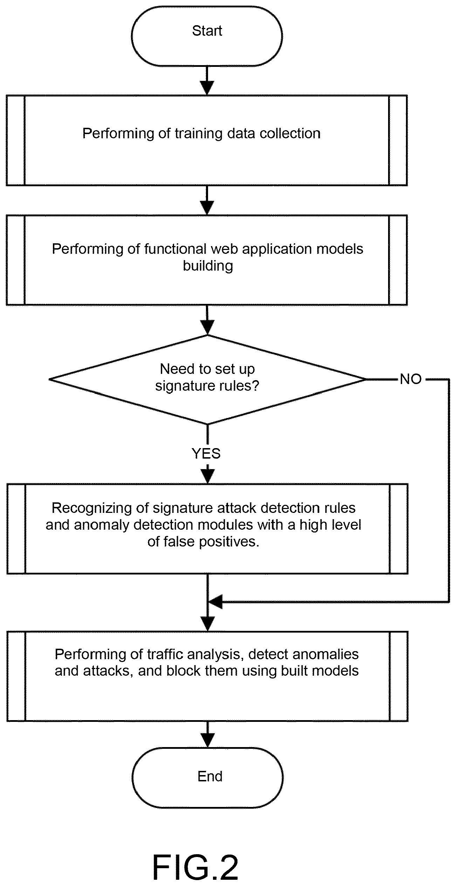

Fig. 2 illustrates the main method the system works in one of embodiments. It consists of a training data collection step, a step for building models of a protected web application, a step for detecting false positives and a web application protection step.

At the step of collecting training data, the Analyzer component collects the protected web application requests and web application responses and records them to the Database component. At this step, the Analyzer component also records information on the triggering of signature rules to the database if the Analyzer component includes at least one module for detecting attacks on a web application based on a set of signature detection rules.

At the step of building web application functional models, the Learning component builds the previously specified set of functional models of a web application based on the set of requests and responses collected at the step of collecting training data. The built models are stored in the Database component.

At the step of detecting false positives, the Learning component identifies the signature attack detection rules and individual anomaly detection modules that have a high level of false positives. For identification of the signature rules with a high level of false positives, the Learning component generates and stores in the database settings for attack detection modules that use signature rules by which signature rules with a high level of false positives are excluded from further use at the web application protection step. In respect of the detected false positives, log messages are also created that allow the operator and/or system administrator to analyze the causes of false positives of the anomaly detection modules and initiate the system learning step again or manually make the necessary changes to the built models of a web application.

Finally, at the web application protection step, the Analyzer component receives built functional web application models from the Database component and uses them to analyze new incoming requests to a web application and its responses, assess the degree of normality or anomaly of the request data and decide on their further processing (blocking or allowing the request). The Analyzer also uses native web application functional models to configure HTTP reverse proxy and Passive HTTP sniffer service components to ensure that only such web application requests (and responses) that are requests (and responses) to the dynamic resources of a protected web application. At the same time, the analysis of requests to the static resources of a web application (and responses to these requests) at the step of protection of a web application is not performed in order to reduce computational complexity and improve system performance.

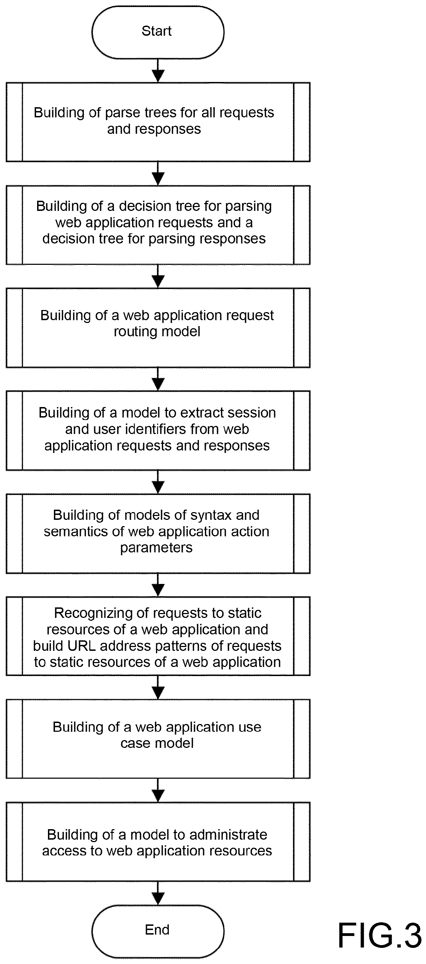

Fig. 3 illustrates a method for building protected web application functional models. This method is executed by the Learning component on the basis of web application requests and responses information obtained at the step of collecting training data. The results of the various steps of this method are built models of various aspects of the protected web application functioning. This method consists of the following basic steps:

- building of parse trees for all protected web application requests and web application responses;

- building of a decision tree for parsing web application requests and a decision tree for parsing web application responses;

- building of a request routing model (i.e., identifying various actions of the functional logic layer of a web application);

- building of a model for extracting session and user identifiers from web application requests and responses;

- building of models of syntax and semantics of action parameters of the functional logic layer of a web application;

- identifying of requests to static resources of a web application and building patterns of URL requests to static resources;

- building of a model of web application use cases;

- building of a model to administrate access to web application resources.

Depending on the system embodiment, a part of the functional models of a protected web application is built by the Learning component in a fully automatic mode, another part of the functional models of a protected web application is built in an automated or manual mode, with the participation of the operator and/or the system administrator. The list of method steps and the corresponding models of a protected web application, which are built by the system in a fully automatic mode, includes at least the following steps:

- building of parse trees for all requests and responses;

- building of a decision tree for parsing web application requests and a decision tree for parsing web application responses;

- building of a request routing model;

- identifying of requests to static resources of a web application and building patterns of request URL addresses to static resources of a web application.;

The models built at the system training step are saved in the Database component and are used further at the web application protection step for analyzing web application requests and responses. The operator and/or the system administrator has the ability to manually edit and configure all built models using the Web dashboard component.

The first step applied at the step of building web application functional models is to build parse trees for all protected web application requests and web application responses collected at the step of collecting training data. To create an HTTP request to a web application, modern browsers encode structured data to be transmitted using the sequential application of various encoding methods. The parse trees simulate the certain results of a web application parsing HTTP requests incoming to it by applying a set of appropriate decoders and restoring the original structured data. The parse trees are an internal representation of HTTP requests to a web application and are used in other models of a web application.

The parse tree for a request is the presentation of a request to a web application in the form of a root tree, which uniquely reflects the structure of the request and its contents and is obtained by sequentially applying various data decoding functions to the request and its parts (for example, x-www-form-urlencode, json, etc.).

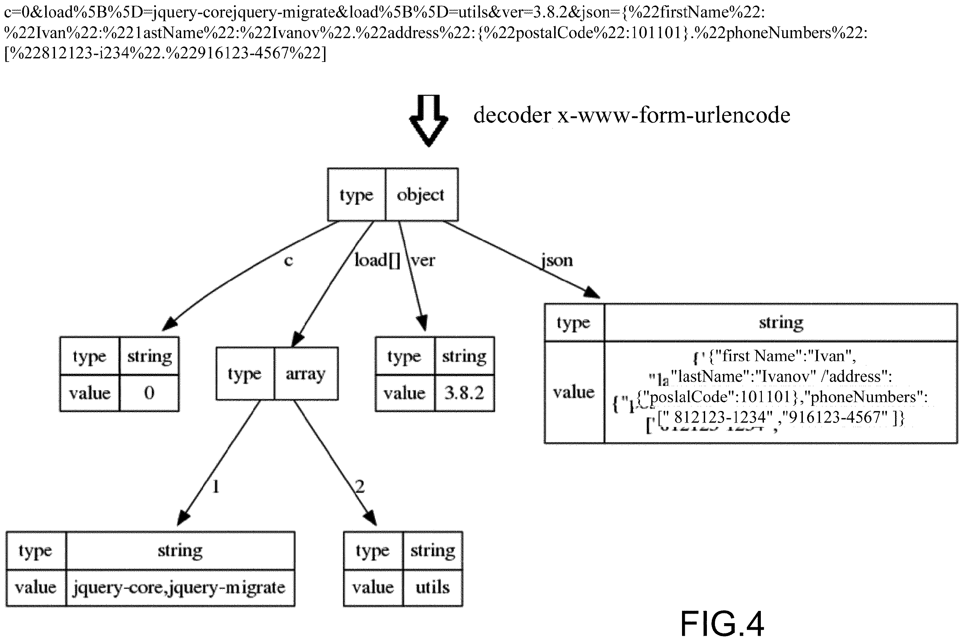

Fig. 4 illustrates the process of applying the decoder x-ww-form-urlencode to the string data (in this example, the query string of the HTTP request). As a result of applying this decoder, a root parse tree was obtained, the arcs of witch correspond to the names of individual query string parameters, and the nodes - to the values of these parameters.

The leaves of a partially built parse tree, in turn, can be structured data obtained using some encoding method. Applying a proper decoder to them modifies a partial tree, replacing the given leaf node with a new root parse tree. This process continues until the resulting leaf nodes of the parse tree turn out to be simple data (numbers, strings, etc.), to which decoders can no longer be applied.

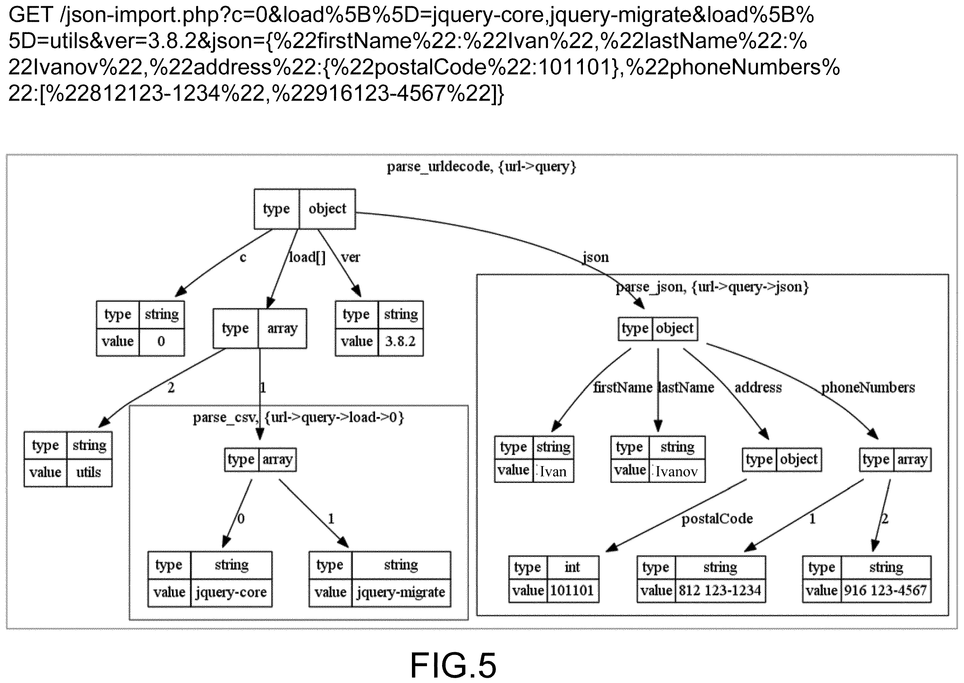

Fig. 5 illustrates the HTTP GET request parse tree resulting from the sequential use of three decoders.

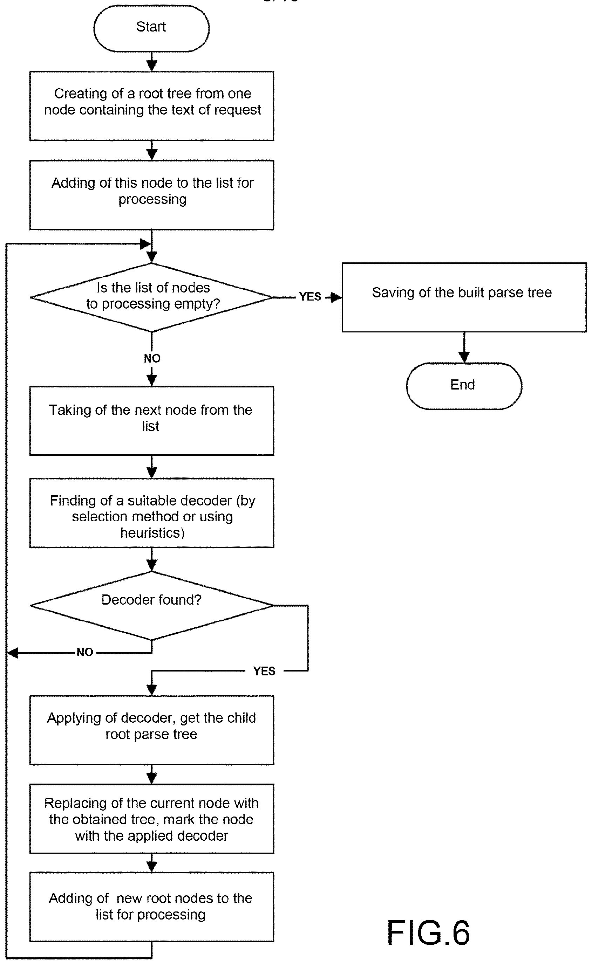

Fig. 6 illustrates a method for building a parse tree for an arbitrary web application request, many of which were obtained at the step of collecting training data. A root tree is created for each request from a single leaf node, which is added to the list for processing. The claimed method further selects one of the root nods for processing and tries to find a decoder, the application of which to the contents of the leaf node leads to successful parsing and building of a child parse tree. This node is then replaced with the found tree and is marked with the corresponding applied decoder. Leaf nodes of the built tree are added to the list for further processing. The process ends when the list of nodes to be processed is empty.

To simulate the web application responses, a similar mechanism of parse trees is used, and a similar method of building parse trees for all web application responses obtained at the step of collecting training data.

Different web application requests (and responses to them) may have a different internal structure. This means that for different requests (and responses) different parse trees will be built, differing not only in the contents of the leaf nodes, but also in the structure of the tree itself. In order to be able to quickly obtain parse trees for observed web application requests and responses at the web application protection step, a request parse decision tree is used (and a similar response parse decision tree). This tree simulates the logic for parsing requests by a protected web application.

The request parse decision tree is a root tree, all paths from the root to the leaves of which correspond to one of the possible chains of decoders used to parse an HTTP request to a web application. The nodes of this tree are labeled by a pair consisting of:

- a decoder to be applied at the next request parsing step to one of the leaf nodes of the current parse tree;

- and an element of the current parse tree to which this decoder should be applied.

The arcs of the request parse decision tree are labeled with sets of predicates. These predicates are defined above the current parse tree and can check conditions of at least the following types:

- presence in the current tree of a parse path with a given label;

- coincidence of the leaf node value along a given path in the current parse tree with the given constant;

- matching of the leaf node value in the current parse tree with a regular expression from a limited predefined set.

Predicates that label the arcs of the request parse decision tree control the selection process of the next node of the decision tree (that is, the choice of the next decoder used and the element of the current parse tree to which this decoder should be applied). In other words, in the process of parsing a request, after selecting the next node of the parse tree and applying its decoder to the outgoing arcs from this node, predicates are calculated in succession. If for the next arc all predicates take the true value, then the incoming node for this arc becomes the next node of the decision tree used to parse the request. This parsing process is performed before reaching the leaf node of the decision tree, or until an error is detected during parsing (situations where the predicates did not accept the true value for any of the arcs of the current node).

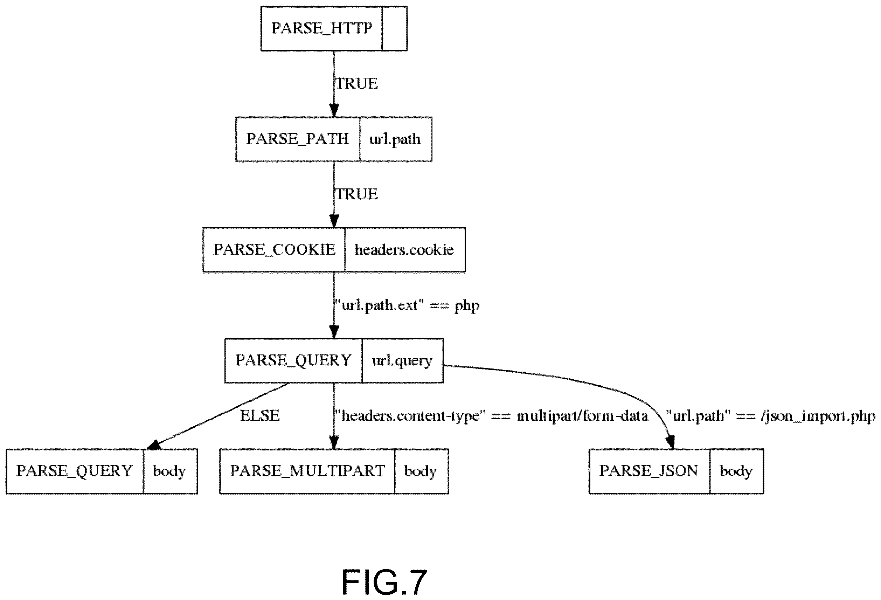

Fig. 7 illustrates an exemplary decision tree for parsing requests. In the given example, the web application processes information from GET and POST requests using the standard scheme, except for the situation when the json import.php script, which processes json data from the request body, is accessed.

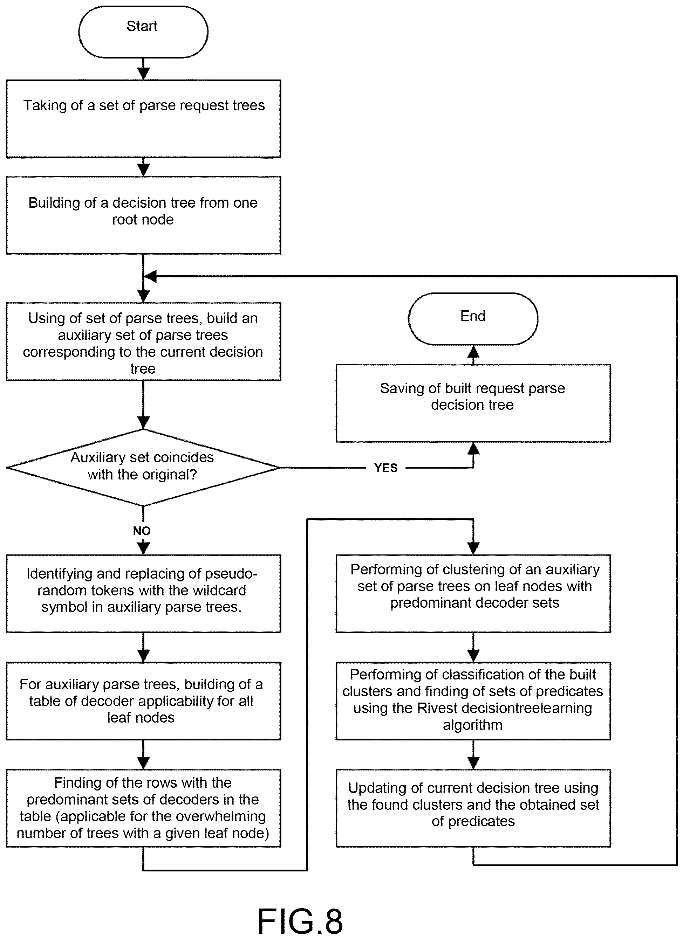

Fig. 8 illustrates a method for building a decision request tree based on a set of request parse trees, built on the first step of a method for building a web application functional model. This method consists of the following steps:

- taking of an empty decision tree with one root and a set of parse trees;
- building of an auxiliary set of parse trees, corresponding to the current view of the decision tree, from the initial set of parse trees;

*   if the auxiliary set of trees does not coincide with the original one, finding and building of child nodes for the current leaf nodes of the decision tree, for which purpose you should perform the following steps:

    ○ identifying and dropping out of pseudo-random tokens in auxiliary request parse trees;
    ○ executing of clustering of an auxiliary set of parse trees according to the principle of applicability of various decoders to them;
    ○ classifying of built clusters using the automatic building of a set of predicates;
    ○ modifying of current decision tree according to the built sets of predicates and clusters of an auxiliary set of parse trees.
    ○ identifying of pseudo-random tokens of parse trees is important in order to identify and drop out those elements of the request parse tree that do not affect the syntactic and structural parsing of the request by a web application, and therefore should not be used in the predicates of the request parse decision tree. Examples of such pseudo-random tokens are at least:

        ✓ session IDs;
        ✓ CSRF tokens;
        ✓ random strings used to prevent data caching;
        ✓ object identifiers of the web application subject domain;
        ✓ timestamps.

These attributes of request tokens are recognizable by two features: their presence in most requests and high variability of values. The identification of all such tokens and their dropping out is performed using the following steps of the method:

*   for each leaf node of the auxiliary parse trees (identified by the path marks), calculating of the number of parse trees with this node;
*   for leaf node of the parse trees, calculating of the number of unique values occurring at a given node;
*   leaf nodes for which the following two conditions are met, are being replaced with the wildcard symbol:

        ○ the share of parse trees with a given node exceeds the given threshold value;
        ○ the number of unique values of this node exceeds the given threshold value.

The following method steps are applied for the clustering of parse tree set:

*   constructing of a table whose columns correspond to all possible decoders, rows to all existing paths in the current auxiliary parse trees, and the cells contain the number of auxiliary parse trees, to the leaf nodes of which the decoder is applied along a given path;

*   finding of the rows of the table where there are dominant sets of decoders, i.e. such sets, which are applicable for the most part of leaf nodes along a given path for an auxiliary set of parse trees;

*   for the selected lines, splitting of auxiliary set of parse trees into clusters, associating a separate cluster with each of the applicable decoders.

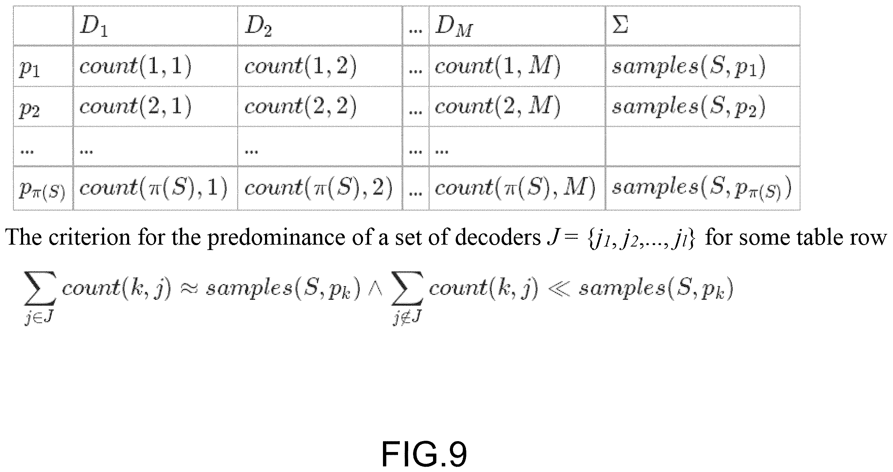

Fig. 9 illustrates the described above table of the applicability of decoders to leaf nodes of an auxiliary set of parse trees and the criterion for the predominance of a set of decoders in a row of such a table.

The existing decision list learning algorithm claimed by Rivest is used to classify the built set of clusters of the auxiliary set of parse trees. The result of this method is the selection of a set of predicates over the elements of the current auxiliary parse trees, allowing to distinguish between different clusters among themselves.

The sequence of steps for building an auxiliary set of decision trees, identifying and dropping out pseudo-random tokens, clustering auxiliary decision trees and classifying them continues until the set of auxiliary parse trees (obtained as a result of applying the current decision tree to the requests) matches the original set of parse trees. This will mean that the built request parse decision tree allows you to parse any of the requests observed during the training data collection step.

Building of a decision tree for parsing web application responses is performed in the same way.

The request routing model is designed to match web application requests with actions of the functional logic layer of a web application which should be performed as a result of processing this request by a web application. Different actions of the web application functional logic layer are implemented by various request processing functions in a web application, and the choice of this function in a web application is determined by the presence of a given set of request parameters (affecting the request routing) and the values of these parameters. During its functioning, a web application parses the request, applies a set of predicate checks to it, and selects the desired request processing function (implementing the required action), depending on which predicate has taken the true value.

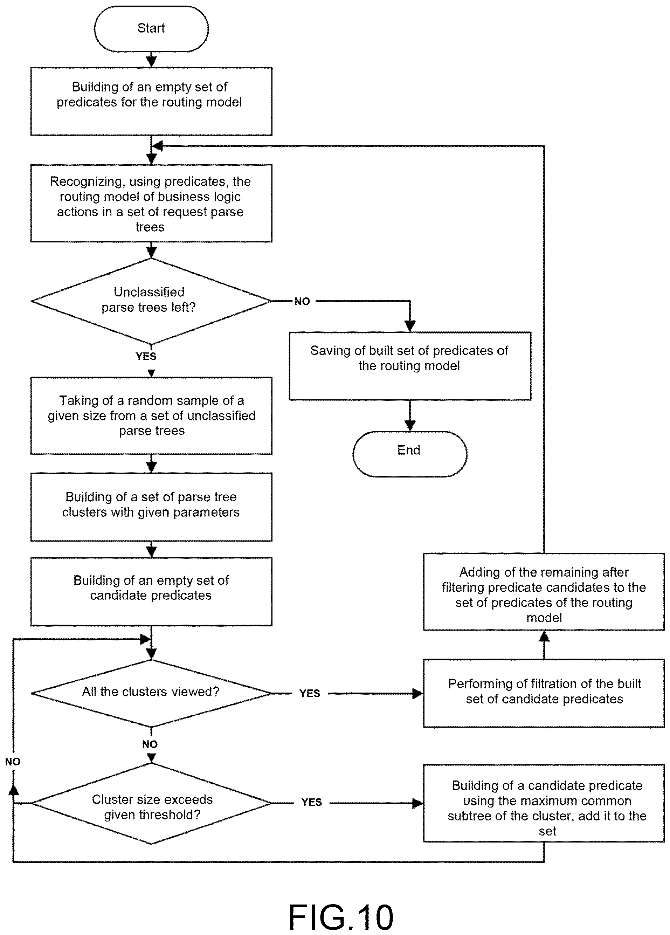

The task of building a request routing model is thus reduced to automatically calculating this set of predicates using machine learning methods based on the set of requests received during the training data collection step. Fig. 10 illustrates a method for building a request routing model in the form of a set of predicates applied to requests (more precisely, request parse trees) of a web application in order to identify individual actions of the functional logic layer of a web application. This method includes the following steps:

* first, initializing of an empty set of predicates forming the request routing model;
* the following steps are taken further iteratively, as long as there remain request parse trees for which none of the built predicates have been applied:

  ○ among parse trees that are not classified using the existing set of predicates, selecting of a random set from a given number of parse trees;
  ○ This selection of parse trees undergoes clustering using a distance metric based on measures of similarity and difference of parse trees.
  ○ selecting of clusters, size of which exceeds a given threshold value, from the set of clusters;
  ○ determining of maximum common subtree for each of these clusters. According to this maximum common subtree, the predicate is built as a conjunction of two types of conditions:

    ✓ conditions of the first type check for the presence of a node with a given path. These conditions are built for all leaf nodes of the maximum common subtree;
    ✓ conditions of the second type check the value at the node with the given path (equality of the constant value). These conditions are built for all leaf nodes of the maximum common subtree if all cluster trees have the same general value at the given node;

  ○ filtering of built set of candidate predicates. During filtering, those predicates that are triggered on trees from other clusters are removed from the set of candidate predicates - thus ensuring that there are no intersections between the predicates;
  ○ successful filtered predicate candidates are added to the building set of predicates of the request routing model, and a new iteration is performed;

* saving of built set of predicates, which makes up the request routing model.

The method of building the request routing model is executed by the Learning component in a fully automatic mode, without the participation of the operator and/or the system administrator. The operator and/or the system administrator, however, has the opportunity to further view and edit the built set of predicates, for example, in order to assign each of them a meaningful human-readable name, which identifies a certain functional logic layer action of a web application. This step is taken solely for the convenience of defining subsequent functional models of a web application (models of use cases and a set of rules administrating access to resources and functions of a web application).

The model for extracting session and user identifiers from requests and responses of a web application is for use in mechanisms for tracking user sessions of a web application. Within this model, each of the actions of the functional logic layer of a web application is associated with a set of parameters of this action (paths in the parse tree of requests to a web application or responses of a web application), the values of which comprise the session identifiers of a web application or the identifier of the user performing the action.

Tracking user sessions and actions of the functional logic layer of a web application, the execution of which leads to the initialization or termination of a user session, is important for the use in the web application use cases model and as service information for identifying requests to static resources of a web application.

The model for extracting session and user identifiers is based on the request routing model obtained earlier and the decision tree for parsing requests and responses. The building of this model can be performed by the operator and/or the system administrator manually or in an automated mode when interacting with the Learning component.

The syntax and semantics models of the web application action parameters are for identification of the action parameters of the functional logic layer of a web application, determination of the types and ranges of acceptable values for these parameters, and identification of the subject domain objects of a web application. The web application action parameters syntax model is used at the web application protection step to detect anomalies in action parameter values, and the parameter semantics model is used in building a web application use case model to determine data dependencies between actions and in the resources access administration model for setting web application user access rights to the objects of the web application subject domain.

The action parameters of a web application include the parameters of requests to a web application identified at the step of building parse trees, minus the following set of request parameters:

* parameters that directly identify the very action of the functional logic layer of a web application;

* parameters that identify the session of a web application and the user of a web application;

* part of service parameters, such as CSRF tokens, etc.

When building a parameter syntax model for each of the action parameters, its type and the allowable range of values are determined. At least the following types can be used as recognizable types:

- string data without specific type;

- numeric value;

- constant or enumerated data type;

- date and/or time;

- email address;

- URL address;

- regular expressions;

- arbitrary text data.

The range of valid values for action parameters defines the rules for checking the value of a parameter at the step of protection of a web application. Values of parameters that are not valid for a parameter of this type increase the assessment of the anomaly of the request in accordance with the given rules for checking the syntax and semantics of the parameters of actions of a web application. Thus, at the training step, in respect of each of the parameters, restrictions should be defined on the range of permissible values of this parameter:

- for string data, calculating of data length in bytes as a selective mean and mean square deviation;

- for numeric values, determining of whether the given number is integer or fractional;

- for constants or enumerated data types, determining of set of certain values that this parameter can receive;

- for date and\or time, determining of allowed time interval, from which the parameter can receive values;

- for parameters that contain URL addresses, specifying of a valid URL address scheme, validity of absolute or relative URL addresses, and presence of the request string of a part of the URL address;

- for regular expressions, building of one-dimensional and multidimensional models of Gauss distributions, describing at least the characteristics of the following parameters: the length of the parameter, the number of individual "words", the number of individual characters of different classes (letters, numbers, punctuation characters, other ASCII characters) and the maximum number of consecutive characters from each category;

- for random textual data, there is no limit on the allowable range of values.

When building a model of semantics of parameters, objects of the level of a web application subject domain are recognized, identified by the values of some subsets of the parameters of the web application actions.

The models of syntax and semantics of action parameters of a web application are built on the basis of the previously received request routing model and request parse decision tree. The building of the syntactic model can be performed automatically, based on the data obtained at the step of collecting the training data. The model of semantics of parameters is built by the operator and/or the system administrator manually or in an automated mode when interacting with the Learning component.

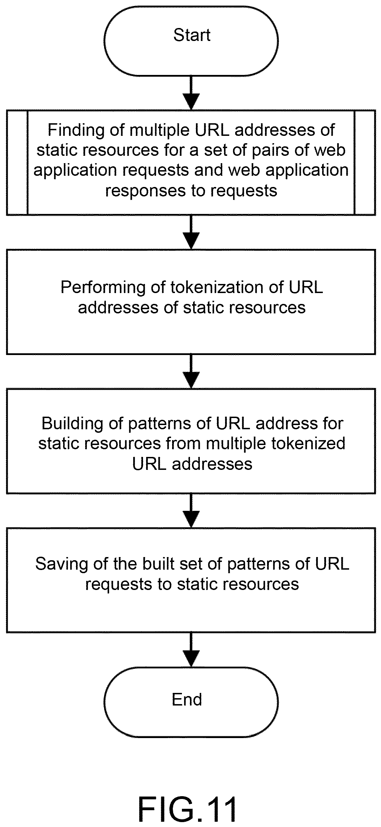

Recognizing of requests to static resources of a web application and building of URL patterns of requests to static resources of a web application is performed in order to identify a variety of static resources of a web application in the form of a set of URL patterns of requests to these resources. This set of request URL address patterns is used later in the protection step of a web application to improve the performance of the Analyzer component. A method for identifying requests to static resources and building static resource request URL address patterns is illustrated in Fig. 11 and consists of the following basic steps:

- receiving of a set of URL addresses of static resources from multiple pairs of requests to a web application and responses of a web application to these requests;

- tokenizing of static resource URL addresses;

- building of static resource URL address patterns using hierarchical clustering;

- saving of obtained set of static resource request URL address patterns in the Database component.

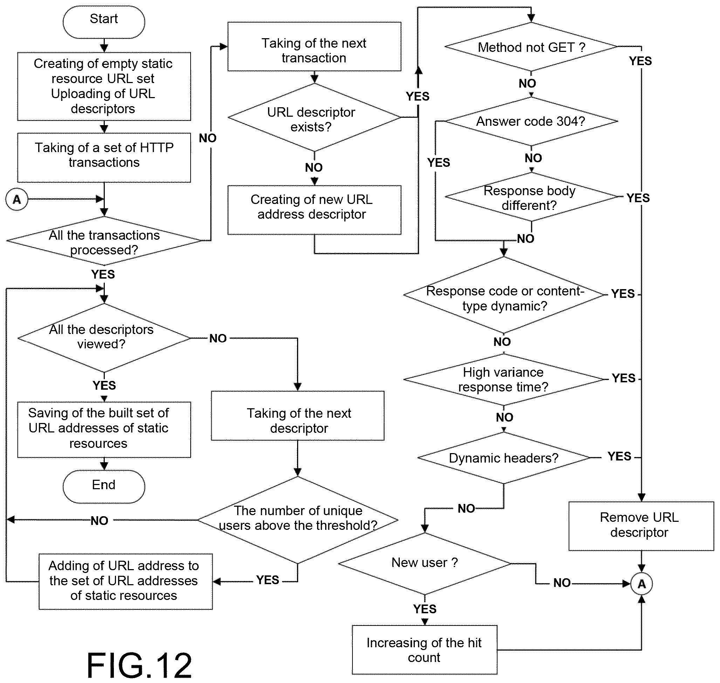

Fig. 12 illustrates a method for obtaining a set of URL addresses of static resources based on an analysis of multiple pairs of requests to a web application and responses of a web application obtained during the training data collection step. This method is based on the classification of requests for requests to static or dynamic resources by analyzing the characteristic features of requests and responses of a web application and includes the following basic steps:

- building of an empty set of URL address descriptors and an empty set of static URL addresses;

- sequential viewing of all pairs of requests and responses of a web application, in order to add new URL address descriptors or to adjust the characteristics of the built descriptors;

• viewing of set of built request URL address descriptors and adding to the set of static URL those URL addresses that are marked as static and for which the count of the number of unique users exceeds a given threshold value.

In the course of its work, the method builds a set of URL resource descriptors, filling it with records of new request URL addresses found, and marks URL descriptors as static or non-static, depending on the characteristics of the observed URL requests to a web application and web application responses, as well as counts the number of unique users who accessed the resource at the URL address. For each next processed request-response pair, the following steps are taken:

• finding of descriptor for the URL of this request or create a new descriptor for this URL;

• for a web application response status code other than 304 (request to take a resource from the browser cache) marking of descriptor as non-static if the type or length of data body of the response for the request (content-type and content-length headers) are different from values previously stored in the descriptor;

• checking of value of the content-type header and the status code of the response of a web application to the response to a request to a static resource, mark the URL address descriptor as non-static in case of invalid values (other than 2xx and 3xx);

• calculating of variance of the request processing time (the difference between the request and response times), marking of URL address descriptor as non-static if the variance exceeds the given threshold value;

• checking for request headers, which are the features of a request to a dynamic resource (Authorization header, etc.), marking of request descriptor accordingly;

• for URL descriptor that saved the mark as the URL of a static resource, increasing of the number of unique users accessing the resource if the current request-response pair belongs to the new user.

The recognition of requests to static resources of a web application and the building of URL address patterns of requests to static resources is performed by the Learning component fully automatically, without the participation of an operator and/or a system administrator.

The web application use case model is for simulating valid use cases for a web application in the form of dependence of some actions of the functional logic layer of a web application on successful execution of other actions, as well as possible dependencies of these actions on data. In order to simulate web application use cases, a finite automation mechanism is used, the states of which simulate the logical states of a web application when interacting with the user, and there are two types of state transitions:

• transitions that occur when a user successfully performs a certain action of the functional logic layer of a web application;

• transitions that occur automatically, according to the timer.

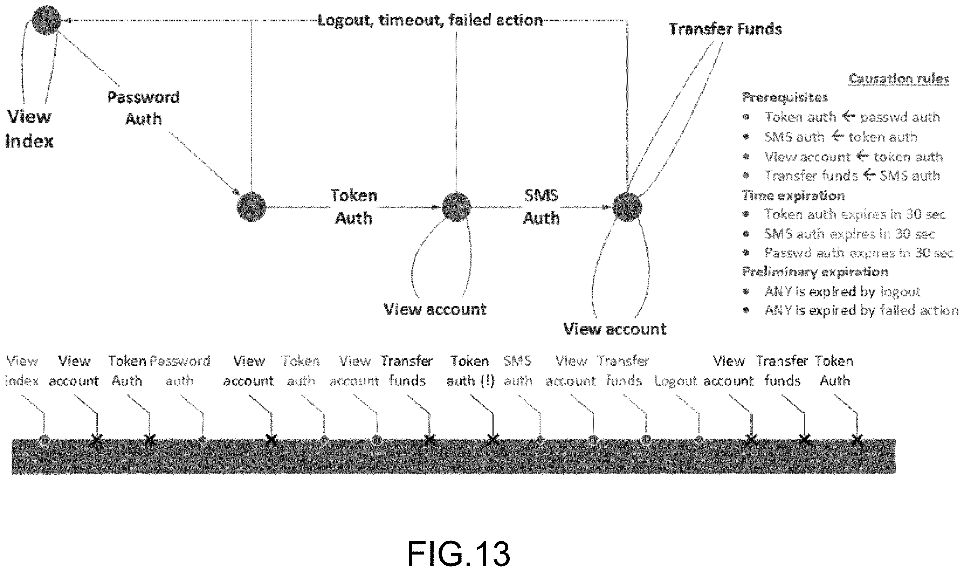

Fig. 13 illustrates an example of a model for a web application use case and a sequence of user actions with indication of permissible and non-permissible actions depending on the logical state of the use case model. The use case model shown in the example describes a system in which only access to the start page of the web application is initially possible (the "View index" action), then after entering the credentials (the "Password auth" action) and the crypto-key authorization (the "Token auth") the user is able to view account data (the "View account" action), and in order to perform the action for transferring funds ("Transfer funds") the user also needs to enter a one-time sms-code.

These use case models can be given in the form of rules that describe at least:

• logical states of a web application in the form of actions allowed in this state of the functional logic layer of a web application (or prerequisites of these actions);

• rules of transition to a logical state in the form of a successful execution of an action of the functional logic layer of a web application;

• rules for transition to preceding logical states when a timer is triggered and\or attempt to perform invalid actions is taken.

At the same level, objects of the web application subject domain (for example, accounts, user profiles, forum entries, etc.) identified by the values of the corresponding parameters of the web application actions can be selected.

The building of a web application use case model is performed in an automated way when interacting with the Learning component.

The model for administrating access to the resources of a web application is for verification of the access rights of the user of a web application to the requested resources and logical functions of a web application. This model is a set of access administration rules, each of which is a set of predicates over the values of the parameters of this action, the functional logic layer of a web application and the decision to allow or deny access to the requested resource or logic function. In one of the system embodiments, these access administration rules can be described in terms of predicates over the subject domain object layer of a web application identified at the step of building the models of syntax and semantics of action parameters of a web application.

Building of a model to administrate access to web application resources is performed by the operator and/or system administrator manually or in a partially automated way when interacting with the Learning component.

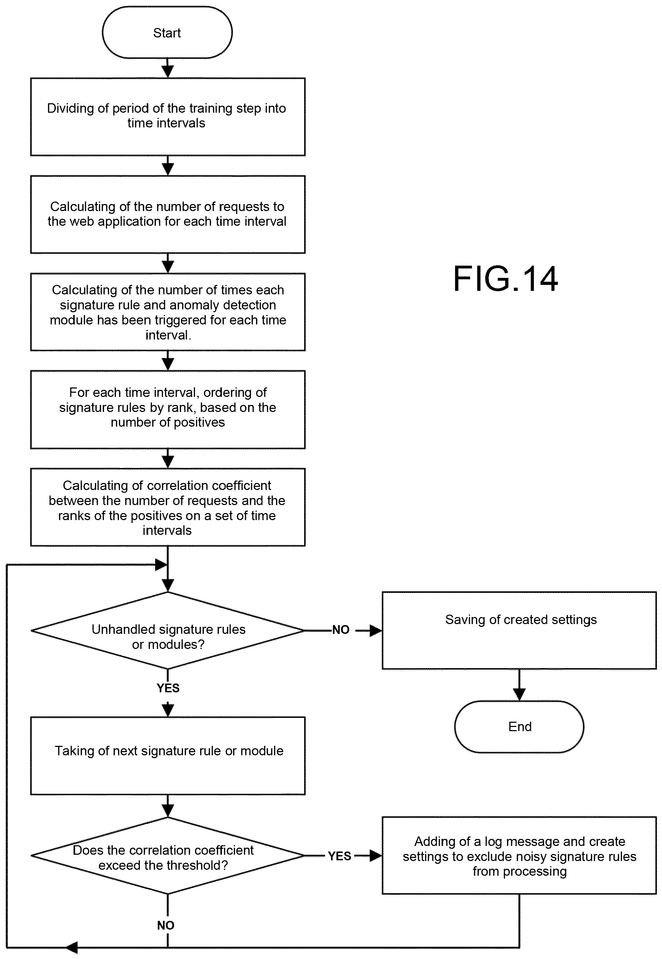

Fig. 14 illustrates the method used by the Learning component at the step of recognizing false positives in order to automatically recognize signature attack detection rules and individual anomaly detection modules with a high level of false positives, create log messages of false positives, and create settings that exclude these signature rules from further use at the web application protection step. This method is performed by the system fully automatically, without the participation of the operator and\or system administrator.

This method uses as input data a set of requests to a web application and information about the triggering of signature attack detection rules and individual anomaly detection modules obtained during the training data collection step. Correlation analysis is used to automatically recognize false positives. To do this, in the first step, the method splits the total time period of the training data collection step into separate equal time intervals. Next, in the second and third steps of the method, for each of the time intervals, the total number of requests to a web application and the number of responses of each individual signature attack detection rule and anomaly detection module are calculated for each of the time intervals.

In the fourth step, for each of the time intervals, the ranks for the given signature rules and modules are built, as are the sequence numbers in the sequence, ordered by increasing the number of matches of each of the signature rules or anomaly detection modules.

In the fifth step, the method calculates at given time intervals the correlation coefficients between the ranks and the number of requests to a web application. In respect for this calculation, the Spearman's rank correlation coefficient is used, calculated by the formula: $p$

$$= \frac{\frac{1}{n-1}\sum_{i=1}^{n}\frac{(x_i-\bar{x})(y_i-\bar{y})}{s_x s_y}}{}$$ where $\bar{x}$ - the average value of the sequence of ranks, n - the number of observations (the number of time intervals), $x_i$ - the value of the observed variable on the i-th time interval, and

$$s_x = \sqrt{\frac{1}{n-1}\sum_{i=1}^{n}(x_i-\bar{x})^2}$$ - the standard deviation of the observed variable. Further, the set of signature attack detection rules and anomaly detection modules is scanned sequentially, and the calculated value of the correlation coefficient is compared with the threshold value. If the threshold value is exceeded, a log message about false positives is generated, and in respect of signature attack detection rules, settings are additionally created to prevent further use of this signature rule.

Finally, a set of created settings and log messages is stored in the Database component.

The values of time intervals into which the training data collection time interval is divided, and the threshold value of the correlation coefficient, were established during preliminary experiments and are part of the settings stored in the Database component. These settings can be changed by the operator and/or the system administrator using the Web dashboard component, if necessary.

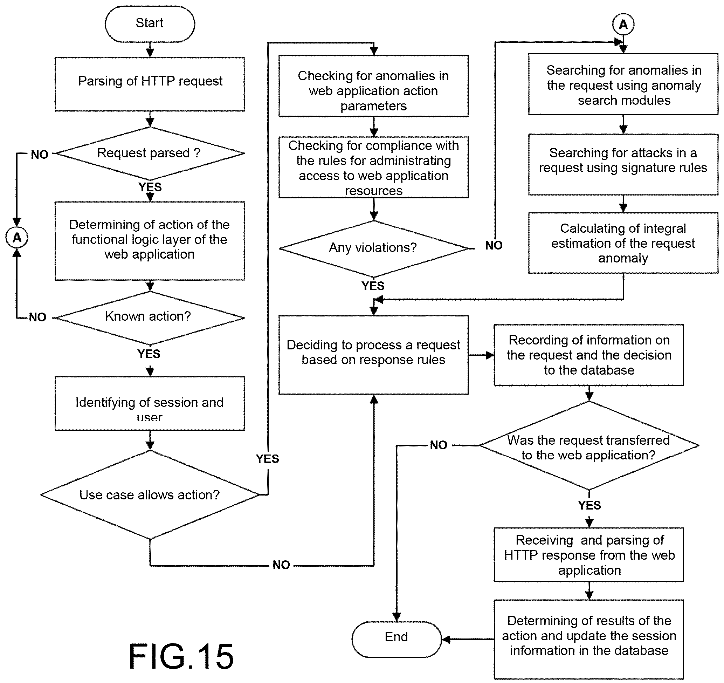

Fig. 15 illustrates a general method for processing a request to a protected web application at the web application protection step in one of the possible embodiments of the system embodiment. The various steps of this method are executed by various modules of the Analyzer Core component after receiving the next request to a web application via the ProxyAdapter or PassiveAdapter module, depending on the lateration of the system embodiment and its location. At various steps of this method, different models of web application functioning are used, which were built earlier at the system training step.

In the first step, the DecisionTreeParser module performs syntactic and structural parsing of the HTTP request. In this step, a request decision tree is used.

In respect of successfully parsed requests, the second step identifies the action of the functional logic layer of a web application and the parameters of this action. This step is performed by the ActionDeterminer module using the web application request routing model.

In the third step, the session and the user who made the request are identified. This step is taken by the SessionTracker module, which recognizes parameters among the request parameters that are responsible for identifying the session and the user.

In the fourth step, the validity of the execution of the action in terms of the web application use cases is checked. This step is taken by the DecisionMaker module using the web application use cases model.

In respect of valid actions, the syntax (types and valid values) and the semantics of the action parameters are checked in the fifth step, and anomalies in the values of the parameters are recognized. This step is performed by the DecisionMaker module using the syntax and semantics models of action parameters of a web application.

In the sixth step, the DecisionMaker module checks the rules for administrating access to web application resources using the set of access administration rules generated by the operator and/or administrator.

In the seventh and eighth steps of the method, the LibinjectionDetector and ModsecurityDetector modules are used, which are responsible for detecting attacks on a web application using previously configured signature rules. The transition to these steps also occurs if the request (performed in the first step of the method) cannot be parsed, and it is impossible to identify the action of the functional logic layer of a web application (performed in the second step of the method).

The results obtained at the seventh and eighth steps of the method are aggregated along with the anomalies detected during the verification of the types and values of action parameters (at the sixth step of the method), generating an integral assessment of the "anomaly" of the request. At the tenth step of the method, the DecisionMaker module decides whether to classify the request as normal, anomalous, or as an attack on a web application, based on an integral assessment of its anomaly and the results of validation check of this action within the framework of the web application use case model and access administration rules. An action on further processing (sending the request to a protected web application, blocking, retrieval of the CAPTCHA test to the user, etc.) and transferring of this action to the ProxyAdapter module (if the alteration of placing the system in the form of a reverse HTTP proxy server is used) is made based on the classification of the request.

Information about the request and the action taken (the request itself and the log message and the detected anomalies and the action taken) is then stored in the Database component to collect statistics and notify the operator and/or the system administrator about incidents.

If it was decided to block the request, the method ends. Otherwise, four more steps are performed sequentially.

First, the web application receives the response to the request and the response is parsed by the DecisionTreeParser module. Next, the ActionStatusDeterminer module determines the result of performing an action based on the analysis model of the web application responses. And finally, the information on the state of the user session is updated in terms of the web application use case model. After performing these steps, the method ends.

**Claims**

1. A computer-implemented method to protect web applications from various classes of attacks, including logical attacks, based on the automatic building of the functional web application models, which includes the following steps:

    • performing of automatic collection of training data on the functioning of a web application;
    • generating of at least one functional web application model by parsing and analyzing the training data obtained in the previous step;

    • detecting of false positives for the rules for detecting attacks on web applications based on the training data and the generated models of the web application functioning;
    • performing of the web application protection mode, in which new incoming requests to a web application and its responses are analyzed, assessing of degree of normality or anomaly of these requests is assessed, and then taking of actions on their further processing.

2. The computer-implemented method of protecting web applications from various classes of attacks according to claim 1, wherein training data is a set of requests to a web application and/or a set of web application responses and/or a set of rules for detecting attacks on web applications.

3. The computer-implemented method of protecting web applications from various classes of attacks according to claim 1, wherein training data is collected automatically using an intelligent firewall.

4. The computer-implemented method of protecting web applications from various classes of attacks according to claim 1, wherein training data is collected automatically during a given time interval.

5. The computer-implemented method of protecting web applications from various classes of attacks according to claim 1, wherein when collecting training data, requests to a protected web application and web application responses are collected and then recorded to the database.

6. The computer-implemented method of protecting web applications from various classes of attacks according to claim 1, wherein a functional web application model is generated at the end of the time period allocated for the collection of training data.

7. The computer-implemented method of protecting web applications from various classes of attacks according to claim 1, wherein a functional web application model is generated using machine learning methods.

8. The computer-implemented way to protect web applications from various classes of attacks according to claim 1, wherein false positives for the rules for detecting attacks on web applications are recognized using statistical methods.

9. The computer-implemented method of protecting web applications from various classes of attacks according to claim 1, wherein settings are additionally created for excluding the rules for detecting attacks with a high level of false positives from further processing.

10. The computer-implemented method of protecting web applications from various classes of attacks according to claim 1, wherein in the web application protection mode, anomalous requests are blocked.

11. A system of web application protection from various classes of attacks, comprising the following components:

• a data storage component configured to store training data, built functional web application models, log messages generated during the system functioning and various system settings;
• GUI component designed to implement the graphical user interface of the system;
• a component for building functional web application models, configured to generate at least one functional web application model by parsing and analyzing the training data;
• a data analysis component that is configured to receive and analyze the traffic of a protected web application, analyze it in order to recognize attacks on a web application and react to attack data, including blocking attacking requests and/or generating and saving messages about detected attacks, which includes:

◦ an active traffic capture module,
◦ a passive traffic capture module,
◦ a web application request and response analysis and decision making module.

FIG.1

FIG.2

Start

Building of parse trees for all requests
and responses

Building of a decision tree for parsing
web application requests and a
decision tree for parsing responses

Building of a web application request
routing model

Building of a model to extract session
and user identifiers from web
application requests and responses

Building of models of syntax and
semantics of web application action
parameters

Recognizing of requests to static
resources of a web application and
build URL address patterns of requests
to static resources of a web application

Building of a web application use
case model

Building of a model to administrate
access to web application resources

End

FIG.3

c=0&load%5B%5D=jquery-corejquery-migrate&load%5B%5D=utils&ver=3.8.2&json={%22firstName%22:
%22Ivan%22:%221astName%22:%22Ivanov%22.%22address%22:{%22postalCode%22:101101}.%22phoneNumbers%22:
[%22812123-i234%22.%22916123-4567%22]

⇩ decoder x-www-form-urlencode

| type | object |
|------|--------|

c    load[]    ver    json

| type | string |
|------|--------|
| value | 0 |

| type | array |
|------|-------|

| type | string |
|------|--------|
| value | 3.8.2 |

| type | string |
|-------|--------|
| value | {"first Name":"Ivan", "lastName":"Ivanov" /"address": {"poslalCode":101101},"phoneNumbers": ["812123-1234","916123-4567" ]} |

1     2

| type | string |
|-------|--------|
| value | jquery-core,jquery-migrate |

| type | string |
|-------|--------|
| value | utils |

FIG.4

EP 3 550 789 A1

GET /json-import.php?c=0&load%5B%5D=jquery-core,jquery-migrate&load%5B%5D=utils&ver=3.8.2&json={%22firstName%22:%22Ivan%22,%22lastName%22:%22Ivanov%22,%22address%22:{%22postalCode%22:101101},%22phoneNumbers%22:[%22812123-1234%22,%22916123-4567%22]}

FIG.5

EP 3 550 789 A1

```
                    ┌─────────────┐
                    │    Start    │
                    └──────┬──────┘
                           │
                           ▼
        ┌──────────────────────────────────────┐
        │   Creating of a root tree from one    │
        │  node containing the text of request  │
        └──────────────────┬───────────────────┘
                           │
                           ▼
        ┌──────────────────────────────────────┐
        │    Adding of this node to the list for │
        │               processing               │
        └──────────────────┬───────────────────┘
                           │
                           ▼
```

Is the list of nodes to processing empty?  — YES →  Saving of the built parse tree  →  End

NO

Taking of the next node from the list

Finding of a suitable decoder (by selection method or using heuristics)

Decoder found?

NO

YES

Applying of decoder, get the child root parse tree

Replacing of the current node with the obtained tree, mark the node with the applied decoder

Adding of new root nodes to the list for processing

FIG.6

23

FIG.7

FIG.8

|  | $D_1$ | $D_2$ | ... $D_M$ | $\Sigma$ |
|---|---|---|---|---|
| $p_1$ | $count(1,1)$ | $count(1,2)$ | ... $count(1,M)$ | $samples(S,p_1)$ |
| $p_2$ | $count(2,1)$ | $count(2,2)$ | ... $count(2,M)$ | $samples(S,p_2)$ |
| ... | ... | ... | ... ... | |
| $p_{\pi(S)}$ | $count(\pi(S),1)$ | $count(\pi(S),2)$ | ... $count(\pi(S),M)$ | $samples(S,p_{\pi(S)})$ |

The criterion for the predominance of a set of decoders $J = \{j_1, j_2, ..., j_l\}$ for some table row

$$\sum_{j \in J} count(k,j) \approx samples(S, p_k) \wedge \sum_{j \notin J} count(k,j) \ll samples(S, p_k)$$

## FIG.9

Start

Building of an empty set of predicates for the routing model

Recognizing, using predicates, the routing model of business logic actions in a set of request parse trees

Unclassified parse trees left? —— NO

YES

Saving of built set of predicates of the routing model

Taking of a random sample of a given size from a set of unclassified parse trees

End

Building of a set of parse tree clusters with given parameters

Building of an empty set of candidate predicates

Adding of the remaining after filtering predicate candidates to the set of predicates of the routing model

All the clusters viewed? —— YES

Performing of filtration of the built set of candidate predicates

NO

NO

Cluster size exceeds given threshold? —— YES

Building of a candidate predicate using the maximum common subtree of the cluster, add it to the set

# FIG.10

Start

Finding of multiple URL addresses of static resources for a set of pairs of web application requests and web application responses to requests

Performing of tokenization of URL addresses of static resources

Building of patterns of URL address for static resources from multiple tokenized URL addresses

Saving of the built set of patterns of URL requests to static resources

End

FIG.11

FIG.12

Start

Creating of empty static resource URL set Uploading of URL descriptors

Taking of a set of HTTP transactions

A

All the transactions processed?

Taking of the next transaction

URL descriptor exists?

YES

NO

Creating of new URL address descriptor

Method not GET ?

YES

NO

Answer code 304?

YES

NO

Response body different?

YES

NO

Response code or content-type dynamic?

YES

NO

High variance response time?

YES

NO

Dynamic headers?

YES

NO

Remove URL descriptor

A

YES

All the descriptors viewed?

NO

Taking of the next descriptor

The number of unique users above the threshold?

YES

New user ?

YES

NO

A

Increasing of the hit count

YES

Saving of the built set of URL addresses of static resources

End

NO

Adding of URL address to the set of URL addresses of static resources

FIG.13

```
                        ┌──────────┐
                        │  Start   │
                        └────┬─────┘
                             ▼
        ┌────────────────────────────────────────┐
        │ Dividing of period of the training step │
        │         into time intervals             │
        └────────────────────┬───────────────────┘
                             ▼
        ┌────────────────────────────────────────┐
        │  Calculating of the number of requests  │
        │  to the web application for each time   │
        │              interval                   │
        └────────────────────┬───────────────────┘
                             ▼
        ┌────────────────────────────────────────┐
        │  Calculating of the number of times each │
        │  signature rule and anomaly detection    │
        │  module has been triggered for each time │
        │               interval.                  │
        └────────────────────┬───────────────────┘
                             ▼
        ┌────────────────────────────────────────┐
        │  For each time interval, ordering of     │
        │  signature rules by rank, based on the   │
        │         number of positives              │
        └────────────────────┬───────────────────┘
                             ▼
        ┌────────────────────────────────────────┐
        │  Calculating of correlation coefficient  │
        │  between the number of requests and the  │
        │  ranks of the positives on a set of time │
        │              intervals                   │
        └────────────────────┬───────────────────┘
```

FIG.14

Unhandled signature rules or modules? — NO → Saving of created settings → End

YES

Taking of next signature rule or module

Does the correlation coefficient exceed the threshold? — YES → Adding of a log message and create settings to exclude noisy signature rules from processing

NO

```
                          ┌─────────────┐
                          │    Start    │
                          └─────────────┘
                                 │
                                 ▼
                    ┌────────────────────────┐         ┌────────────────────────┐         ┌────────────────────────┐
                    │ Parsing of HTTP request │        │  Checking for anomalies │        │  Searching for anomalies│
                    └────────────────────────┘         │  in web application     │        │  in the request using   │
                                 │                      │  action parameters      │        │  anomaly search modules │
                                 ▼                      └────────────────────────┘         └────────────────────────┘
         NO ◄────◇ Request parsed ? ◇                              │                                   │
                    ◇            ◇                                 ▼                                   ▼
                       │ YES                            ┌────────────────────────┐         ┌────────────────────────┐
                       ▼                                │ Checking for compliance │        │  Searching for attacks  │
                    ┌────────────────────────┐          │ with the rules for      │        │  in a request using     │
                    │ Determining of action of│         │ administrating access   │        │  signature rules        │
                    │ the functional logic    │         │ to web application      │        └────────────────────────┘
                    │ layer of the web        │         │ resources               │                    │
                    │ application             │         └────────────────────────┘                    ▼
                    └────────────────────────┘                      │                      ┌────────────────────────┐
                                 │                                  ▼                       │ Calculating of integral │
         NO ◄────◇ Known action? ◇                      ◇ Any violations? ◇ ── NO           │ estimation of the       │
                    ◇          ◇                         ◇            ◇                      │ request anomaly         │
                       │ YES                                  │ YES                         └────────────────────────┘
                       ▼                                      ▼
                    ┌────────────────────────┐    ┌────────────────────────┐     ┌────────────────────────┐
                    │ Identifying of session  │    │ Deciding to process a   │     │ Recording of information│
                    │ and user                │    │ request based on        │────▶│ on the request and the  │
                    └────────────────────────┘    │ response rules          │     │ decision to the database│
                                 │                 └────────────────────────┘     └────────────────────────┘
                                 ▼                             ▲                              │
              ◇ Use case allows action? ◇                     │              NO ──◇ Was the request transferred │
                    ◇                  ◇ ── YES                │                    ◇ to the web application? ◇
                    ◇                  ◇                       │                            │ YES
                         │ NO ─────────────────────── NO ──────┘                            ▼
                                                                              ┌────────────────────────┐
                                                                              │ Receiving and parsing   │
                                                        ┌─────────┐           │ of HTTP response from    │
                                                        │   End   │◄──        │ the web application      │
                                                        └─────────┘           └────────────────────────┘
                                                                                          │
                                                                                          ▼
                                                                              ┌────────────────────────┐
                                                                              │ Determining of results  │
                                                                              │ of the action and update │
                                                                              │ the session information  │
                                                                              │ in the database          │
                                                                              └────────────────────────┘
```

# FIG.15

<div align="center">**INTERNATIONAL SEARCH REPORT**</div>

| | International application No. |
|---|---|
| | PCT/RU 2017/000194 |

| A. CLASSIFICATION OF SUBJECT MATTER -- |
|---|
| *H04L 29/06 (2006.01)* |
| *G06F 15/18 (2006.01)* |
| According to International Patent Classification (IPC) or to both national classification and IPC |

| B. FIELDS SEARCHED |
|---|
| Minimum documentation searched (classification system followed by classification symbols) |
| H04L 29/00-29/06, G06F 9/00-9/46, 15/00-15/18 |
| Documentation searched other than minimum documentation to the extent that such documents are included in the fields searched |
| Electronic data base consulted during the international search (name of data base and, where practicable, search terms used) |
| PatSearch (RUPTO internal), USPTO, PAJ, K-PION, Esp@cenet, Information Retrieval System of FIPS |

| C. DOCUMENTS CONSIDERED TO BE RELEVANT | | |
|---|---|---|
| Category* | Citation of document, with indication, where appropriate, of the relevant passages | Relevant to claim No. |
| X | US 2016/0366160 A1 (BLUE COAT SYSTEMS, INC.) 15.12.2016, paragraphs [0015]-[0016], [0019] [0023], [0028], [0056], [0059], [0064], [0088], [0113], [0126]-[0128], [0131], [0133]-[0134], [0138], [0148], [0150] -[0152], [0158],[0163]-[0164], [0168]-[0164], [0178], [0212], [0215], [0232], [0316], [0397]-[0407], [0408], [0414], [0418], [0432] -[0434], [0442], [0446], [0452], [0455], [0547], [0577], [0604] | 1-11 |
| A | US 2012/0110174 A1 (LOOKOUT, INC.) 03.05.2012 | 1-11 |
| A | WO 2013/015691 A1 (SECURITY MATTERS B.V.) 31.01.2013 | 1-11 |
| A | RU 2580027 C1 (ZAO "LABORATORIA KASPERSKOGO") 10.04.2016 | 1-11 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 September 2017 (18.09.2017) | 21 September 2017 (21.09.2017) |

| Name and mailing address of the ISA/ RU | Authorized officer |
|---|---|
| Facsimile No. | Telephone No. |

Form PCT/ISA/210 (second sheet) (January 2015)

**EP 3 550 789 A1**

**Patent documents cited in the description**

- US 8051484 B
- US 7472413 B
- US 20120278851 A